# FASCICULE DE BREVET EUROPEEN

(11) **EP 1 230 854 B1**
(45) Date de publication et mention de la délivrance du brevet: **07.11.2007**
(21) Numéro de dépôt: 02360055.4
(22) Date de dépôt: 04.02.2002
(51) Int. Cl.: A01M 7/00

(54) **Procédé de fabrication d'une rampe de pulvérisation**
Herstellungsverfahren für ein Spritzgestänge
Method of production of a sprayer boom

(30) Priorité: 09.02.2001 FR 0102039
(43) Date de publication de la demande: 14.08.2002
(73) Titulaire: KUHN S.A., 67700 Saverne (FR)
(72) Inventeur: Guesdon, Alain, 77123 Noisy sur Ecole (FR)
(74) Mandataire: Andres, Jean-Claude

(56) Documents cités:
- FR-A- 2 744 786
- FR-A- 2 777 746
- GB-A- 927 917

## Description

La présente invention se rapporte au domaine technique général du machinisme agricole et plus particulièrement à un procédé de fabrication d'une rampe de pulvérisation.

D'une manière connue de l'homme de l'art, un pulvérisateur agricole comporte une rampe destinée à supporter une multitude de buses. Lors du travail, ladite rampe est disposée perpendiculairement à une direction d'avance et de part et d'autre dudit pulvérisateur. Lesdites buses, quant à elles, sont destinées à pulvériser un liquide de traitement sur le sol ou sur des plantes. Pour augmenter la largeur de la bande de terrain traitée en un passage, les pulvérisateurs agricoles sont équipés actuellement de rampe pouvant atteindre 30 mètres de long.

Afin de supporter les contraintes engendrées par de telles dimensions, les rampes de pulvérisation sont généralement réalisées au moyen d'une structure en treillis. Vue suivant une section transversale, cette structure en treillis a une forme sensiblement triangulaire dont l'un des sommets est dirigé vers le haut. Lesdites buses sont avantageusement liées à la base de cette forme triangulaire.

Ladite structure en treillis est généralement constituée d'une poutre supérieure et de deux poutres inférieures disposées aux trois sommets de ladite forme triangulaire. Ladite structure en treillis comporte également des poutrelles disposées en zigzag entre la poutre supérieure et les poutres inférieures. Lesdites poutrelles forment ainsi les cotés de ladite forme triangulaire. Pour sa part, la base de la forme triangulaire est réalisée au moyen de traverses reliant les deux poutres inférieures.

La fabrication de cette structure en treillis nécessite donc de positionner dans l'espace les trois poutres principales puis de les relier entre elles au moyen des poutrelles et des traverses. Un tel positionnement des trois poutres est relativement difficile à réaliser.

De plus, de part leur position par rapport auxdites poutres principales et afin de faciliter leur assemblage par soudure, lesdites poutrelles nécessitent une découpe particulièrement complexe de leurs extrémités. En effet, le plan de coupe desdites extrémités doit être incliné suivant deux directions par rapport à un plan perpendiculaire à l'axe longitudinal de ladite poutrelle.

Le but de la présente invention consiste à remédier à ces inconvénients de l'état de la technique en proposant un procédé de fabrication d'une rampe de pulvérisation moins complexe et donc moins onéreux.

Pour ce faire, le procédé de la présente invention est caractérisé par le fait qu'il comporte les étapes suivantes :
- on réalise à plat deux échelles constituées respectivement d'une poutre supérieure reliée à une poutre inférieure par des poutrelles,
- on réalise des traverses inférieures, et
- on assemble les deux échelles et les traverses inférieures pour former une structure en trois dimensions.

Avec le procédé de fabrication de la présente invention, la disposition des poutres et poutrelles s'effectue avantageusement dans un plan. De plus, le plan de coupe des extrémités desdites poutrelles est incliné suivant au plus une direction par rapport à un plan perpendiculaire à l'axe longitudinal de ladite poutrelle.

D'autres caractéristiques de l'invention, à considérer séparément ou dans toutes leurs combinaisons possibles, apparaîtront encore dans la description suivante d'un exemple de réalisation non limitatif de l'invention représenté sur les dessins annexés sur lesquels :
- la **figure 1** représente une vue en plan d'une échelle conforme à la présente invention,
- la **figure 2** représente, vue suivant la flèche II définie sur la figure 1, une autre vue de ladite échelle,
- la **figure 3** représente, vue suivant la flèche III définie sur la figure 1, une structure obtenue par le procédé de la présente invention, et
- la **figure 4** représente une vue, suivant la flèche IV définie sur la figure 3, de ladite structure.

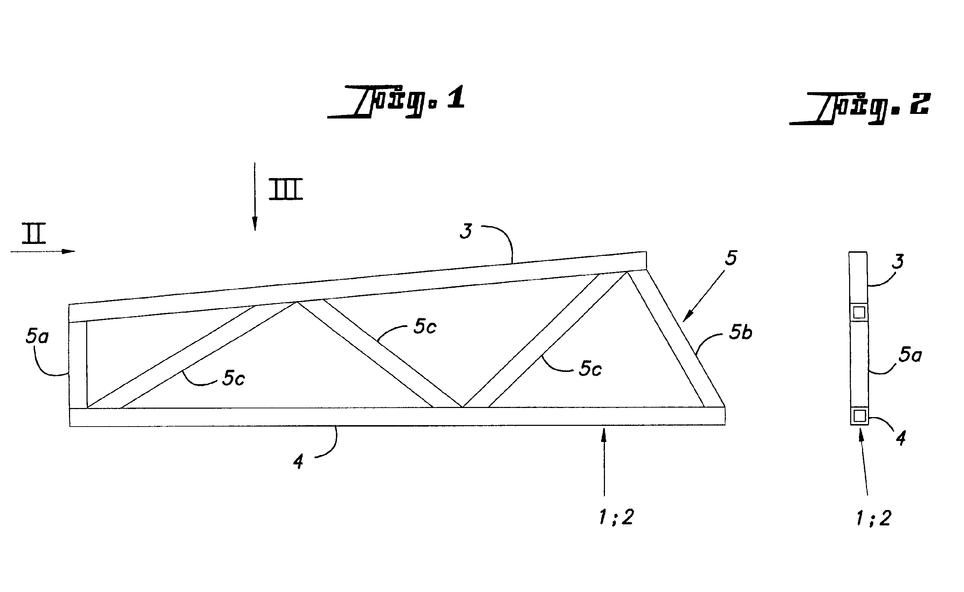

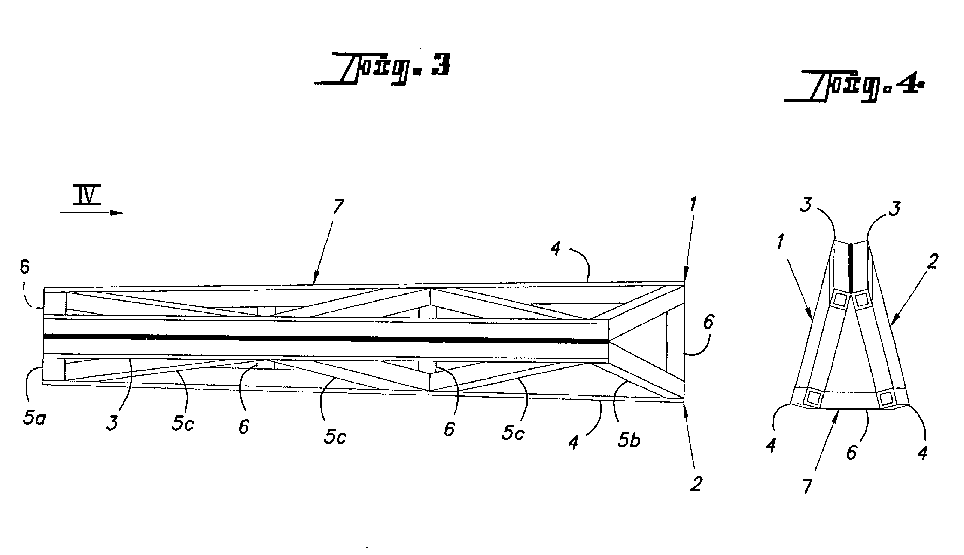

Une des étapes du procédé de fabrication de la présente invention consiste à réaliser deux échelles (1 ; 2). Ladite échelle (1 ; 2) comporte une poutre supérieure (3) et une poutre inférieure (4). Lesdites poutres supérieure (3) et inférieure (4) sont liées entre elles au moyen de poutrelles (5). A la lumière de la figure 2, lesdites poutres (3, 4) et lesdites poutrelles (5) sont avantageusement disposées suivant un même plan. De ce fait, l'assemblage d'une telle échelle (1 ; 2) peut être réalisé très facilement en posant à plat les différents éléments (3, 4, 5) constituant ladite échelle (1 ; 2).

Dans l'exemple de réalisation représenté sur la figure 1, une première extrémité de ladite poutre supérieure (3) est liée à une première extrémité de ladite poutre inférieure (4) au moyen d'une première poutrelle d'extrémité (Sa). De même, une deuxième extrémité de ladite poutre supérieure (3) est liée à une deuxième extrémité de ladite poutre inférieure (4) au moyen d'une deuxième poutrelle d'extrémité (5b). De manière avantageuse, ladite première poutrelle d'extrémité (Sa) et ladite poutre inférieure (4) forme au moins sensiblement un angle de 90 degrés.

Dans l'exemple de réalisation représenté sur la figure 1, ladite échelle (1 ; 2) comporte en sus trois autres poutrelles (5c) disposées en zigzag entre ladite poutre supérieure (3) et ladite poutre inférieure (4). Une telle disposition en zigzag augmente avantageusement la rigidité de ladite échelle (1 ; 2).

A la lumière de la figure 1, chaque extrémité desdites poutrelles (5) est découpée suivant un plan respectif. Ledit plan respectif est incliné suivant au plus une direction par rapport à un plan perpendiculaire à l'axe longitudinal de la poutrelle correspondante (5). La réalisation desdites découpes est donc fortement simplifiée.

Afin d'allier légèreté et robustesse, lesdites poutres (3, 4) et lesdites poutrelles (5) sont avantageusement obtenues à partir d'un profilé creux. Dans l'exemple de réalisation représenté sur les figures, ledit profilé creux est un tube carré. Le tube carré étant couramment utilisé en mécanique, son prix d'achat est relativement bas. D'où encore une diminution du coût de fabrication de ladite structure.

Une autre étape du procédé de fabrication de la présente invention consiste à assembler les deux échelles (1 ; 2) afin de former une structure en trois dimensions (7). En effet à la lumière des figures 3 et 4, lesdites échelles (1 ; 2) sont disposées de manière à ce que lesdites poutres supérieures respectives (3) soient accolées. Pour leur part, lesdites poutres inférieures (4) sont éloignées l'une de l'autre au moyen de traverses inférieures (6). Ainsi vue suivant la figure 4, ladite structure (7) présente une section transversale sensiblement triangulaire.

De manière préférentielle, ladite échelle (1) et ladite échelle (2) sont au moins sensiblement identiques. Ainsi la section de ladite structure en trois dimensions (7) dessine un triangle sensiblement isocèle.

Dans l'exemple de réalisation représenté sur la figure 3, ladite structure (7) comporte quatre traverses inférieures (6) disposées transversalement auxdites poutres inférieures (4). Lesdites traverses inférieures (6) sont avantageusement parallèles entre elles.

Les rampes de pulvérisation de longueur relativement modeste peuvent être réalisées au moyen d'une seule structure (7). Dans un tel cas, lesdites poutres supérieures (3) et lesdites poutres inférieures (4) sont avantageusement parallèles entre elles. De ce fait, la section transversale de ladite structure (7) est uniforme sur toute la longueur de ladite rampe. De plus, la découpe desdites traverses inférieures (6) s'en trouve simplifiée.

Par contre, les rampes de longueur relativement importante sont généralement composées de plusieurs tronçons articulés. D'une manière connue de l'homme de l'art, ces tronçons articulés permettent notamment de replier ladite rampe lors du transport. Au moins un desdits tronçons est avantageusement réalisé au moyen de ladite structure (7). Dans un tel cas et d'une manière préférentielle, lesdites poutres supérieures (3) et lesdites poutres inférieures (4) sont convergentes. La section transversale de ladite structure (7) varie donc le long de ladite rampe. Plus précisément, ladite section transversale décroît progressivement en s'approchant d'une extrémité de ladite rampe.

Le procédé de fabrication, la structure (7) et la rampe qui viennent d'être décrits, ne sont qu'un exemple de réalisation et d'utilisation qui ne saurait en aucun cas limiter le domaine de protection défini par les revendications suivantes.

## Revendications

1. Procédé de fabrication d'une rampe de pulvérisation ***caractérisé par le fait* qu'**il comprend les étapes suivantes :
- on réalise à plat deux échelles (1 ; 2) constituées respectivement d'une poutre supérieure (3), d'une poutre inférieure (4) et de poutrelles (5) reliant lesdites poutres (3, 4),
- on réalise des traverses inférieures (6), et
- on assemble les deux échelles (1 ; 2) et les traverses inférieures (6) pour former une structure en trois dimensions (7).

2. Procédé de fabrication selon la revendication 1, ***caractérisé par le fait que*** ladite structure (7) présente une section transversale au moins sensiblement triangulaire.

3. Procédé de fabrication selon la revendication 1 ou 2, ***caractérisé par le fait que*** lesdites poutres supérieures respectives (3) desdites échelles (1 ; 2) sont accolées.

4. Procédé de fabrication selon l'une quelconque des revendications 1 à 3, ***caractérisé par le fait que*** lesdites poutres inférieures respectives (4) desdites échelles (1 ; 2) sont éloignées l'une de l'autre au moyen desdites traverses inférieures (6).

5. Procédé de fabrication selon l'une quelconque des revendications 1 à 4, ***caractérisé par le fait qu**'*au moins une desdites poutrelles (5) et ladite poutre inférieure (4) d'une desdites échelles (1 ; 2) forment au moins sensiblement un angle de 90 degrés.

6. Procédé de fabrication selon l'une quelconque des revendications 1 à 5, ***caractérisé par le fait qu**'*au moins une desdites poutrelles (5) et ladite poutre supérieure (3) d'une desdites échelles (1 ; 2) forment au moins sensiblement un angle de 90 degrés.

7. Procédé de fabrication selon l'une quelconque des revendications 1 à 6, ***caractérisé par le fait que*** lesdites poutres supérieures (3) et lesdites poutres inférieures (4) de ladite structure (7) sont convergentes.

8. Procédé de fabrication selon l'une quelconque des revendications 1 à 7, ***caractérisé par le fait que*** ladite échelle (1) et ladite échelle (2) sont au moins sensiblement identiques.

9. Procédé de fabrication selon l'une quelconque des revendications 1 à 8, ***caractérisé par le fait que*** ladite rampe comporte un unique tronçon, lequel tronçon étant réalisé au moyen de ladite structure (7).

10. Procédé de fabrication selon l'une quelconque des revendications 1 à 8, ***caractérisé par le fait que*** ladite rampe est réalisée au moyen d'au moins deux tronçons articulés, l'un au moins desdits tronçons est réalisé au moyen de ladite structure (7).

11. Rampe de pulvérisateur agricole, ***caractérisée par le fait qu'***elle est fabriquée par un procédé selon l'une quelconque des revendications 1 à 10.

12. Pulvérisateur agricole, ***caractérisée par le fait qu'***il comporte au moins une rampe selon la revendication 11.

## Claims

1. A method for manufacturing a spray boom ***characterized in* that** the method comprises the following steps:
- making flat two ladders (1; 2) comprised respectively of an upper beam (3), a lower beam (4) and girders (5) connecting the said beams (3, 4),
- making lower crossbeams (6), and
- assembling the two ladders (1; 2) and the lower crossbeams (6) to form a three-dimensional structure (7).

2. Manufacturing method according to claim 1, ***characterized in* that** the said structure (7) presents a cross section that is at least substantially triangular.

3. Manufacturing method according to claim 1 or 2, ***characterized in* that** the said respective upper beams (3) of the said ladders (1; 2) are side by side.

4. Manufacturing method according to any one of claims 1 to 3, ***characterized in* that** the said respective lower beams (4) of the said ladders (1; 2) are held apart from each other by means of the said lower crossbeams (6).

5. Manufacturing method according to any one of claims 1 to 4, ***characterized in* that** at least one of the said girders (5) and the said lower beam (4) of one of the said ladders (1; 2) form at least substantially an angle of 90 degrees.

6. Manufacturing method according to any one of claims 1 to 5, ***characterized in* that** at least one of the said girders (5) and the said upper beam (3) of one of the said ladders (1; 2) form at least substantially an angle of 90 degrees.

7. Manufacturing method according to any one of claims 1 to 6, ***characterized in* that** the said upper beams (3) and the said lower beams (4) of the said structure (7) are convergent.

8. Manufacturing method according to any one of claims 1 to 7, ***characterized in* that** the said ladder (1) and the said ladder (2) are at least substantially identical.

9. Manufacturing method according to any one of claims 1 to 8, ***characterized in* that** the said boom comprises a single section, which section is made by means of the said structure (7).

10. Manufacturing method according to any one of claims 1 to 8, ***characterized in* that** the said boom is made by means of at least two articulated sections, at least one of the said sections is made by means of the said structure (7).

11. Agricultural spray boom, ***characterized in* that** it is made by a method according to any one of claims 1 to 10.

12. Agricultural sprayer, ***characterized in* that** it comprises at least one boom according to claim 11.

## Patentansprüche

1. Verfahren zur Herstellung eines Spritzgestänges, ***dadurch gekennzeichnet,* dass** es die folgenden Schritte umfasst:
- flache Herstellung von zwei Leitern (1; 2), die jeweils von einem oberen Träger (3), einem unteren Träger (4) und von Stangen (5) gebildet sind, die die Träger (3, 4) verbinden,
- Herstellung der unteren Querstreben (6), und
- Zusammenbau der beiden Leitern (1; 2) und unteren Querstreben (6), um eine dreidimensionale Struktur (7) zu bilden.

2. Herstellungsverfahren nach Anspruch 1, ***dadurch gekennzeichnet,* dass** die Struktur (7) einen im Wesentlichen dreieckigen Querschnitt aufweist.

3. Herstellungsverfahren nach Anspruch 1 oder 2, ***dadurch gekennzeichnet,* dass** die jeweiligen oberen Träger (3) der Leitern (1; 2) aneinander anliegen.

4. Herstellungsverfahren nach irgend einem der Ansprüche 1 bis 3, ***dadurch gekennzeichnet,* dass** die jeweiligen unteren Träger (4) der Leitern (1; 2) voneinander mittels der unteren Querstreben (6) entfernt sind.

5. Herstellungsverfahren nach irgend einem der Ansprüche 1 bis 4, ***dadurch gekennzeichnet,* dass** mindestens eine der Stangen (5) und der untere Träger (4) einer der Leitern (1; 2) mindestens im Wesentlichen einen Winkel von 90 Grad bilden.

6. Herstellungsverfahren nach irgend einem der Ansprüche 1 bis 5, ***dadurch gekennzeichnet,* dass** mindestens eine der Stangen (5) und der obere Träger (3) einer der Leitern (1; 2) mindestens im Wesentlichen einen Winkel von 90 Grad bilden.

7. Herstellungsverfahren nach irgend einem der Ansprüche 1 bis 6, ***dadurch gekennzeichnet,* dass** die oberen Träger (3) und die unteren Träger (4) der Struktur (7) konvergierend sind.

8. Herstellungsverfahren nach irgend einem der Ansprüche 1 bis 7, ***dadurch gekennzeichnet,* dass** die Leiter (1) und die Leiter (2) zumindest im Wesentlichen identisch sind.

9. Herstellungsverfahren nach irgend einem der Ansprüche 1 bis 8, ***dadurch gekennzeichnet,* dass** das Gestänge einen einzigen Abschnitt umfasst, wobei dieser Abschnitt mittels der Struktur (7) hergestellt ist.

10. Herstellungsverfahren nach irgend einem der Ansprüche 1 bis 8, ***dadurch gekennzeichnet,* dass** das Gestänge mittels mindestens zwei Gelenkabschnitten hergestellt ist, wobei mindestens einer der Abschnitte mittels der Struktur (7) hergestellt ist.

11. Landwirtschaftliches Spritzgestänge, ***dadurch gekennzeichnet,* dass** es durch ein Verfahren nach irgend einem der Ansprüche 1 bis 10 hergestellt ist.

12. Landwirtschaftliche Feldspritze, ***dadurch gekennzeichnet,* dass** sie mindestens ein Gestänge nach Anspruch 11 umfasst.
